# EUROPÄISCHE PATENTSCHRIFT

(11) **EP 1 535 779 B1**
(45) Veröffentlichungstag und Bekanntmachung des Hinweises auf die Patenterteilung: **05.11.2008**
(21) Anmeldenummer: 04027887.1
(22) Anmeldetag: 24.11.2004
(51) Int. Cl.: B60J 7/02

(54) **Dachmodul eines Fahrzeugdaches**
Roof module for a vehicle roof
Module de toit pour toit de véhicule

(30) Priorität: 30.11.2003 DE 10356429
(43) Veröffentlichungstag der Anmeldung: 01.06.2005
(73) Patentinhaber: Webasto AG, 82131 Stockdorf (DE)
(72) Erfinder: Leroy, Alain, 86911 Diessen-Dettenschwang (DE); Schrötter, Arnold, 82234 Wessling (DE); Wisuschil, Rainer, 83052 Bruckmühl (DE); Rudolph, Thomas, 82229 Hechendorf (DE); Steininger, Christian, 82131 Stockdorf (DE)

(56) Entgegenhaltungen:
- WO-A-01/94141
- DE-A1- 19 919 505
- DE-U1- 9 207 442
- FR-A- 2 669 589
- US-A- 4 159 144

## Beschreibung

Die Erfindung betrifft ein Dachmodul eines Fahrzeugdaches, insbesondere eines Personenkraftwagens, das an einer festen Karosseriestruktur angebracht ist und die Dachoberseite des Fahrzeugdaches bildet.

DE 92 07 442 U1 offenbart ein Dachmodul nach dem Oberbegriff des Anspruchs 1.

Aus der DE 199 19 505 A1 ist ein Fahrzeugdach mit einem Dachmodul bekannt geworden, das als vormontierte Baueinheit zur Befestigung an den beiden seitlichen Dachlängsholmen von vorne oder von hinten an diesen Dachlängsholmen eingeschoben und daran fest angebracht wird und damit die Dachöffnung fest verschließt. Eine nachträglich variable Gestaltung oder Nutzung des Fahrzeugdaches ist hierbei weder vorgesehen noch möglich.

Aus der DE 34 29 880 A1 ist ein Dach für Kraftfahrzeuge bekannt geworden, das als vormontierte Baugruppe oder Dachmodul gebildet und mit der Karosserie von deren Innenraum her mittels Schnell- oder Schnappverschlüssen lösbar verbindbar ist. Das gesamte Dachmodul kann in unterschiedlichen Ausgestaltungen vorgesehen sein, die in ihrer Gesamtheit von der Karosserie entfernt und gegeneinander ausgetauscht werden können.

Aufgabe der Erfindung ist es, ein eingangs genanntes Dachmodul zu schaffen, das eine universelle Nutzungsmöglichkeit bietet.

Diese Aufgabe wird bei dem oben genannten Dachmodul erfindungsgemäß dadurch gelöst, daß das Dachmodul zwischen den an den Dachseitenbereichen angeordneten Führungsschienen eine Öffnung besitzt, die von einschiebbaren, auswechselbaren Dachmodulkomponenten verschließbar ist. Mittels der Führungsschienen oder allgemein Schiebeführungen kann eine Dachmodulkomponente gegen eine anders gestaltete Dachmodulkomponente leicht ausgetauscht werden, wobei die Dachkomponenten die gleiche Grundstruktur zur Aufnahme an den Führungen aufweisen. Die Führungen können sich in Dachlängsrichtung bzw. Dachmodullängsrichtung oder auch in Querrichtung über einen Teil des Dachmoduls oder über seine gesamte Länge erstrecken, so daß eine Dachmodulkomponente von vorne, von hinten oder von der Seite am Dachmodul eingeschoben werden kann.

Vorzugsweise sind zwei beabstandete und sich gegenüberliegende Führungsschienen am Dachmodul in Längs- oder Querausrichtung angeordnet, zwischen denen sich die jeweilige Dachmodulkomponente erstreckt.

Die Aufgabe wird bei einem Dachmodul eines Fahrzeugdaches, insbesondere eines Personenkraftwagens, das an einer festen Karosseriestruktur angebracht ist und die Dachoberseite des Fahrzeugdaches bildet, auch dadurch gelöst, daß das Dachmodul eine Aufnahmeeinrichtung zum heckseitigen Einschieben einer auswechselbaren Dachmodulkomponente aufweist. Das heckseitige Einschieben erleichtert insbesondere bei einem Kombi oder Steilheckfahrzeug den Austausch von Dachmodulkomponenten.

Vorteilhafte Ausgestaltungen der Erfindung sind in den Unteransprüchen angegeben.

Wenn das Dachmodul zwei äußere Seitenrandbereiche aufweist, die gegenüber einem dazwischenliegenden Mittelteil erhöht gebildet sind und jeweils eine Innenflanke aufweisen, können an diesen Innenflanken die Führungsschienen angeordnet sein. Damit ist kein über die Dachhaut nach oben vorstehendes Teil für eine Lagereinrichtung erforderlich. Wenn eine Dachmodulkomponente an den Führungen aufgenommen ist, deckt sie die Führungen weitgehend ab.

Nachfolgend wird ein erfindungsgemäßes Dachmodul anhand von Ausführungsbeispielen unter Bezugnahme auf die Zeichnung näher erläutert. Es zeigt:
- Fig. 1: in perspektivischer Draufsicht ein Fahrzeugdach mit einem Dachmodul und daran lösbar festlegbaren Dachmodulkomponenten;
- Fig. 2: in perspektivischer Draufsicht das Fahrzeugdach mit dem Dachmodul in einer zweiten Ausführungsform; und
- Fig. 3: in perspektivischer Draufsicht das Fahrzeugdach mit dem Dachmodul in einer dritten Ausführungsform.

Ein Personenkraftfahrzeug 1 enthält ein Fahrzeugdach 2 mit einer festen Dachstruktur mit jeweils einem seitlichen Dachlängsholm 3, der seitlich mit Dachsäulen (A-Säule 4, B-Säule 5 und C-Säule 6 und gegebenenfalls bei einem längeren Fahrzeug auch mit einer D-Säule), vorderseitig mit einem die Windschutzscheibe 7 oberseitig begrenzenden Windlauf 8 und heckseitig mit einem hinteren Dachquerholm 9 verbunden ist. Die Dachoberseite des Fahrzeugdachs 2 bildet ein Dachmodul 10, das an den Dachlängsholmen 3, dem Windlauf 8 und dem Dachquerholm 9 fest angebracht ist. Das Dachmodul 10 enthält außenseitig zwei längliche Dachseitenbereiche 11, die vorne oberhalb des Windlaufs 8 über einen Dachfrontbereich 12 miteinander verbunden sind und mit diesem eine heckseitig geöffnete U-Form bilden.

Zwischen den zwei länglichen Dachseitenbereichen 11 enthält das Dachmodul einen vorderen Funktionsabschnitt 13 und einen hinteren Funktionsabschnitt 14. Der vordere Funktionsabschnitt 13, der vorne unmittelbar oder mittelbar unter Zwischenschaltung eines weiteren Bauteils wie z. B. einer Windleiteinrichtung (nicht dargestellt) an den Dachfrontbereich 12 angrenzt, enthält z. B. einen Deckel 15 eines außengeführten Schiebedaches, der eine vordere Dachmodulöffnung wahlweise verschließt oder freigibt, wenn er mittels einer an den Dachseitenbereichen 11 angeordneten Führungseinrichtung (nicht dargestellt) nach hinten über den hinteren Funktionsabschnitt 14 verschoben wird. Ein derartiges außengeführtes Schiebedach (ASD) ist z. B. in der WO 98/14342 offenbart.

Der hintere Funktionsabschnitt 14 ist z. B. eine feste Fläche, die mit dem Dachmodul einstückig gebildet ist oder von einem eigenständigen Bauteil gebildet wird und über die der vordere Deckel 15 nach hinten verschiebbar ist. Andererseits kann der hintere Funktionsabschnitt 14 auch eine hintere Dachmodulöffnung 16 aufweisen, die sich zwischen den Dachseitenbereichen 11 und vor dem hinteren Dachquerholm 9 erstreckt und die mittels einer z. B. von einem transparenten hinteren Deckel 17 gebildeten Dachmodulkomponente zu verschließen ist.

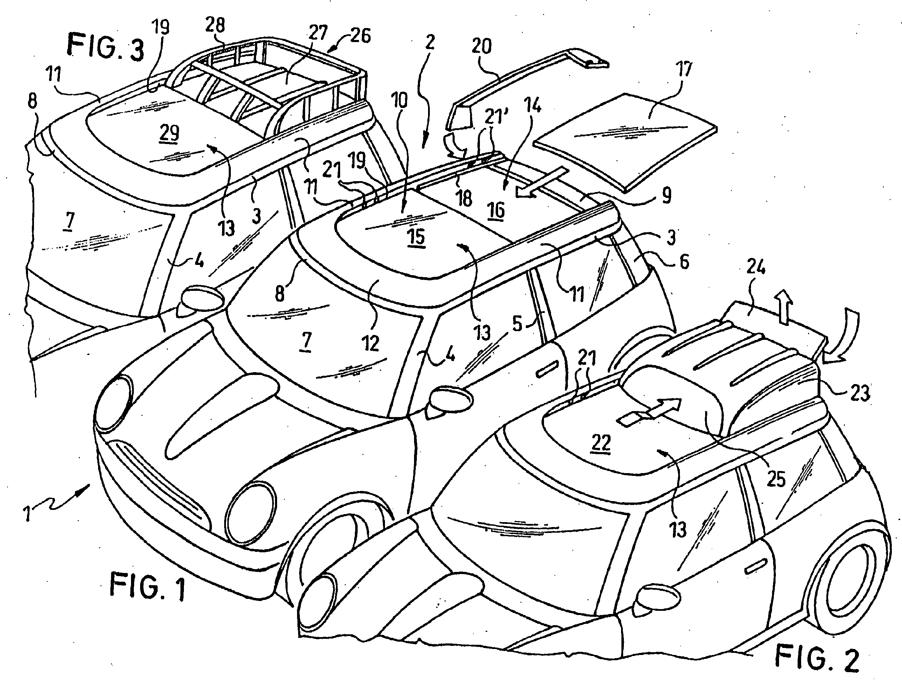

Der hintere Deckel 17 kann am Dachmodul 10 mittels einer Lager- und Führungseinrichtung lösbar und austauschbar angebracht werden, die an jedem Dachseitenbereich 11 eine in Dachlängsrichtung verlaufende Führungsschiene 18 aufweist. Die Dachseitenbereiche 11 sind gegenüber dem dazwischenliegenden Mittelteil des Dachmoduls 10 rahmenartig erhöht gebildet und weisen gegeneinander gerichtete Innenflanken 19 auf, an denen die Führungsschienen 18 derart angeordnet sind, daß der daran aufgenommene hintere Deckel 17 über den hinteren Dachquerholm 9 nach vorne eingeschoben werden kann (siehe Fig. 1). In seiner die Dachmodulöffnung 16 verschließenden Schließstellung ist der Deckel 17 randseitig mittels einer Dichtungseinrichtung (nicht dargestellt) abgedichtet.

Jeder Dachseitenbereich 11 weist an seiner Innenflanke 19 oberhalb der Führungsschiene 18 zumindest eine Lageraufnahme zum Festlegen eines Lastenträgers 20 auf, der sich quer über das Dachmodul 10 erstreckt. Im Ausführungsbeispiel gemäß Fig. 1 enthält jeder Dachseitenbereich 11 eine vordere Lageraufnahme 21 zum Festlegen eines Lastenträgers über dem vorderen Funktionsabschnitt 13 und eine hintere Lageraufnahme 21' zum Festlegen des Lastenträgers 20 über dem hinteren Funktionsabschnitt 14. Die beiden Lageraufnahmen 21 und 21' an dem rechten Dachseitenbereich 11 sind beispielhaft schematisch als jeweils zwei zylindrische Vertiefungen zum Aufnehmen von vorstehenden Lagerzapfen des Lastenträgers 20 dargestellt, können jedoch auch andere Gestalt aufweisen. Grundsätzlich kann die Lagerung der Lastenträger 20 am Fahrzeugdach 2 bzw. am Dachmodul 10 an anderen Lagerungen wie z. B. an zusätzlichen Führungsschienen, die oberhalb der Führungsschienen 18 für den hinteren Deckel 17 bzw. eine hintere Dachmodulkomponente an den Dachseitenbereichen 11 angeordnet sind, erfolgen.

Bei dem in Fig. 2 dargestellten Ausführungsbeispiel enthält der vordere Funktionsabschnitt 13 ein innenlaufendes Schiebedach mit einem bewegbaren Deckel 22, der zur Bewegung in seine hintere Offenstellung an Führungsschienen (nicht dargestellt) geführt ist, die an den beiden Dachseitenbereich 11 bzw. Innenflanken 19 unterhalb der beiden Führungsschienen 18 für die hintere Dachmodulkomponente angeordnet sind. Der Deckel 22 des innenlaufenden Schiebedaches wird beim Öffnen von einer Lagereinrichtung zunächst abgesenkt und dann an den Führungsschienen nach hinten unter die hintere Dachmodulkomponente verschoben. Die hintere Dachmodulkomponente ist hierbei entweder ein Deckel 17 entsprechend Fig.1 oder gemäß Fig. 2 eine Ladebox 23, die eine geschlossene Unterseite mit einem flachen Bodenteil mit seitlichen Führungselementen zum Eingriff in die Führungsschienen 18 aufweist. Die Ladebox 23 weist z. B. eine hintere Klappe 24 zum Verschließen einer heckseitigen Beladeöffnung auf oder sie ist mit ihrem gesamten Oberteil um ein vorderes oder ein seitliches Schwenkgelenk gegenüber dem Bodenteil verschwenkbar, um sie beladen oder entladen zu können. Zumindest ein Teilbereich wie z. B. die Vorderseite 25 der Ladebox 23 kann transparent gebildet sein, so daß Umgebungslicht das Innere der Ladebox 23 erhellen kann. Wenn das Bodenteil der Ladebox 23 ebenfalls zumindest einen vorderen transparenten Abschnitt aufweist, kann über die unbeladene oder nur teilweise beladene Ladebox 23 Licht in den Fahrzeuginnenraum gelangen. Die Ladebox ist beispielsweise aus Kunststoff wie z. B. GFK mit einem transparenten Einsatz oder aus Polycarbonat gebildet, das bedarfsweise zumindest in dem lichtdurchlässigen Bereich transparent gebildet ist.

Statt der Ladebox 23 oder dem Deckel 17 kann als weitere hintere Dachmodulkomponente auch ein Gepäckträger 26 (siehe Fig. 3) an den Führungen 18 des Dachmoduls 10 eingeschoben und festgelegt werden, z. B. durch Rastungen oder durch Verschrauben. Der Gepäckträger 26 enthält eine feste Bodenplatte 27 mit seitlichen Führungselementen zum Eingriff in den Führungsschienen 18 und einen Trägeraufbau 28, beispielsweise in der Art einer Reling mit Stützsprossen, an der Ladegut mit Spannbändern oder Spanngurten gesichert werden kann.

Der vordere Funktionsabschnitt 13 kann statt des innenlaufenden Schiebedachs mit dem bewegbaren Deckel 22 auch eine fest eingebaute Platte 29 aufweisen, die insbesondere transparent ist und beispielsweise aus Kunststoff hergestellt ist.

Gemäß einem weiteren Ausführungsbeispiel enthält das Dachmodul 10 als vorderen Funktionsabschnitt eine integral gebildete vordere feste Fläche oder Platte. Diese Fläche oder Platte bzw. jede vordere Dachmodulkomponente ist an ihrem Vorderrand vorzugsweise bündig mit dem Dachfrontbereich 12 des Dachmoduls 10 angeordnet. Die beiden Dachseitenbereiche 11 sind anschließend an den Dachfrontbereich 12 erhöht gebildet, so daß die daraus resultierenden Innenflanken 19 zur Aufnahme der Führungen 18 und der Lagerungen für Lastenträger zur Verfügung stehen.

Wesentliches Gestaltungsmerkmal dieses Dachmoduls 10 sind somit die beiden gegenüber dem Mittelteil erhabenen Dachseitenbereiche 11, deren Innenflanken zur Aufnahme von Lagerungen und Führungen für am Dachmodul lösbar anbringbare und bedarfsweise auswechselbare Dachmodulkomponenten wie feste oder bewegbare Deckel oder Lastentrageinrichtungen vorgesehen sind.

Das Dachmodul 10 ist insbesondere aus Kunststoff wie z. B. aus Polycarbonat oder aus einem LFI (long fiber injection) -Material hergestellt, das mit einer Deckfolie versehen sein kann. Bei der Herstellung z. B. aus Polycarbonat können in einem Formwerkzeug die gewünschten Formen des Dachmoduls 10 wie auch die Innenflanken 19 der Dachseitenbereiche 11 leicht hergestellt werden.

Das Dachmodul 10 ist an der festen Dachstruktur zweckmäßigerweise festgeklebt oder auch lösbar festgelegt, z. B. mittels einer Spann- oder Schraubeinrichtung.

In einer weiteren nicht dargestellten Gestaltung enthält das Dachmodul ein flächiges Einschubteil, das eine sich über die gesamte Länge der Dachseitenbereiche erstreckende Dachmodulöffnung verschließen kann. Das bevorzugt aus Kunststoff wie Polycarbonat hergestellte Einschubteil ist z. B. in Wagenfarbe lackiert oder es enthält zumindest einen transparenten Abschnitt.

An einem vorstehend genannten Einschubteil wie generell an jeder hinterer Dachmodulkomponente kann eine Rückleuchte und/oder Bremsleuchten angebracht sein.

Ein hinterer Deckel für den hinteren Funktionsabschnitt 14 kann auch derart gebildet sein, daß er um seinen am Dachmodul gelagerten Vorderrand hochgeschwenkt werden kann. Damit kann ein hinterer Fahrzeuginnenraum über die dabei freigelegte Dachmodulöffnung beladen werden. Allgemein kann der hintere Deckel als Teil eines ausstellbaren Hubdaches oder Spoilerdaches gebildet sein, so daß der Deckel an seinem Hinterrand in eine Belüftungsstellung hochschwenkbar ist.

Das außengeführte Schiebedach mit dem vorderen Deckel 15 wie auch das innenlaufende Schiebedach mit dem Deckel 22 können jeweils Bau- und Funktionseinheiten darstellen, die an dem Dachmodul 10 austauschbar angebracht sind oder zumindest bei der Herstellung des Dachmoduls als fertige Montageeinheiten verwendbar sind.

Wenn die Dachstruktur ohne einen hinteren Dachquerholm 9 gebildet ist und die Dachseitenbereiche 11 heckseitig an den C-Säulen befestigt sind, kann nach dem Öffnen des hinteren schwenkbaren Deckels oder allgemein dem Herausziehen der hinteren Dachmodulkomponente und ggfs. bei freigelegter Hecköffnung ein hinterer Bereich des Fahrzeuginnenraums als nach oben offener Laderaum genutzt werden.

### Bezugszeichenliste

- 1: Personenkraftfahrzeug
- 2: Fahrzeugdach
- 3: Dachlängsholm
- 4: A-Säule
- 5: B-Säule
- 6: C-Säule
- 7: Windschutzscheibe
- 8: Windlauf
- 9: hinterer Dachquerholm
- 10: Dachmodul
- 11: Dachseitenbereich
- 12: Dachfrontbereich
- 13: vorderer Funktionsabschnitt
- 14: hinterer Funktionsabschnitt
- 15: Deckel
- 16: Dachmodulöffnung
- 17: hinterer Deckel
- 18: Führungsschiene
- 19: Innenflanke
- 20: Lastenträger
- 21: vordere Lageraufnahme
- 21': hintere Lageraufnahme
- 22: Deckel
- 23: Ladebox
- 24: Klappe
- 25: Vorderseite
- 26: Gepäckträger
- 27: Bodenplatte
- 28: Trägeraufbau
- 29: Platte

## Patentansprüche

1. Dachmodul eines Fahrzeugdaches, insbesondere eines Personenkraftwagens, das an einer festen Karosseriestruktur angebracht ist, die Dachoberseite des Fahrzeugdaches bildet und zwei äußere Dachseitenbereiche (11) aufweist, an denen Führungsschienen (18) zum verschiebbaren Anbringen von zumindest einer Dachmodulkomponente (17, 23, 26) vorgesehen sind,
**dadurch gekennzeichnet,**
**dass** eine sich zwischen den beiden äußeren Dachseitenbereichen (11) erstreckende Dachmodulöffnung (16) von zumindest einer an den Führungsschienen (18) einschiebbaren, auswechselbaren Dachmodulkomponente (15, 17, 22, 23, 26, 29) verschließbar ist.

2. Dachmodul nach Anspruch 1,
**dadurch gekennzeichnet, dass** die Führungsschienen (18) zum heckseitigen Einschieben einer auswechselbaren Dachmodulkomponente (17, 23, 26) gebildet sind.

3. Dachmodul nach Anspruch 1 oder 2,
**dadurch gekennzeichnet, dass** die zwei äußeren Dachseitenbereiche (11) gegenüber einem dazwischenliegenden Mittelteil erhöht gebildet sind und jeweils eine Innenflanke (19) aufweisen, an der die Führungsschiene (18) angeordnet ist.

4. Dachmodul nach einem der Ansprüche 1 bis 3,
**dadurch gekennzeichnet, dass** als Dachmodulkomponente unterschiedliche Bauteile vorgesehen und am Dachmodul (10) anbringbar sind.

5. Dachmodul nach Anspruch 4,
**dadurch gekennzeichnet, dass** die Dachmodulkomponente ein Deckel (17), eine geschlossene Ladebox (23) oder eine offene Trägereinrichtung (26) ist.

6. Dachmodul nach einem der Ansprüche 1 bis 5,
**dadurch gekennzeichnet, dass** ein zwischen den zwei äußeren Dachseitenbereichen (11) liegender Innenbereich zumindest in einen vorderen Funktionsabschnitt (13) und einen hinteren Funktionsabschnitt (14) unterteilt ist.

7. Dachmodul nach einem der Ansprüche 1 bis 6,
**dadurch gekennzeichnet, dass** das Dachmodul (10) an Dachholmen (3) fest angebracht ist.

8. Dachmodul nach einem der Ansprüche 1 bis 7,
**dadurch gekennzeichnet, dass** das Dachmodul (10) an seitlichen Dachlängsholmen (3), vorderseitig an einem Windlauf (8) und heckseitig an einem hinteren Dachquerholm (9) fest angebracht ist.

9. Dachmodul nach einem der Ansprüche 1 bis 8,
**dadurch gekennzeichnet, dass** ein vorderer Funktionsabschnitt (13) des Dachmoduls (10) ein öffnungsfähiges Dachteil ist, insbesondere ein außengeführtes Schiebedach oder ein innengeführtes Schiebedach.

10. Dachmodul nach einem der Ansprüche 1 bis 9,
**dadurch gekennzeichnet, dass** zusätzliche Befestigungsaufnahmen (21, 21') für Lastenträger (20) vorgesehen sind.

11. Fahrzeug mit einem Dachmodul nach einem der Ansprüche 1 bis 10.

## Claims

1. Roof module for a vehicle roof, in particular for a passenger vehicle, said roof module being attached to a fixed body structure which forms the upper side of the vehicle roof and has two outer roof side regions (11) on which guide rails (18) for the displaceable attachment of at least one roof module component (17, 23, 26) are provided, **characterized in that** a roof module opening (16) which extends between the two outer roof side regions (11) can be closed by at least one interchangeable roof module component (15, 17, 22, 23, 26, 29) which can be pushed in on the guide rails (18).

2. Roof module according to Claim 1, **characterized in that** the guide rails (18) are formed for pushing in an exchangeable roof module component (17, 23, 26) on the rear side.

3. Roof module according to Claim 1 or 2, **characterized in that** the two outer roof side regions (11) are formed such that they are raised in relation to a central part located in between and each have an inner flank (19) on which the guide rail (18) is arranged.

4. Roof module according to one of Claims 1 to 3, **characterized in that** different components are provided as the roof module component and can be attached to the roof module (10).

5. Roof module according to Claim 4, **characterized in that** the roof module component is a cover (17), a closed luggage box (23) or an open support device (26).

6. Roof module according to one of Claims 1 to 5, **characterized in that** an inner region located between the two outer roof side regions (11) is divided at least into a front functional section (13) and a rear functional section (14).

7. Roof module according to one of Claims 1 to 6, **characterized in that** the roof module (10) is attached fixedly to roof struts (3).

8. Roof module according to one of Claims 1 to 7, **characterized in that** the roof module (10) is attached fixedly to lateral roof longitudinal struts (3), on the front side to a cowl (8) and on the rear side to a rear roof transverse strut (9).

9. Roof module according to one of Claims 1 to 8, **characterized in that** a front functional section (13) of the roof module (10) is an openable roof part, in particular an externally guided sliding roof or an internally guided sliding roof.

10. Roof module according to one of Claims 1 to 9, **characterized in that** additional fastening receptacles (21, 21') are provided for roof racks (20).

11. Vehicle with a roof module according to one of Claims 1 to 10.

## Revendications

1. Module de toit pour un toit de véhicule, notamment un véhicule automobile, qui est monté sur une structure fixe de la carrosserie, qui forme le côté supérieur du toit du véhicule et qui présente deux régions latérales de toit (11) sur lesquelles sont prévus des rails de guidage (18) pour le montage coulissant d'au moins un composant de module de toit (17, 23, 26),
**caractérisé en ce**
**qu'**une ouverture de module de toit (16) s'étendant entre les deux régions latérales extérieures du toit (11) peut être fermée par au moins un composant de module de toit (15, 17, 22, 23, 26, 29) remplaçable, pouvant être inséré sur les rails de guidage (18).

2. Module de toit selon la revendication 1,
**caractérisé en ce que** les rails de guidage (18) sont formés pour permettre l'insertion par l'arrière d'un composant remplaçable du module de toit (17, 23, 26).

3. Module de toit selon la revendication 1 ou 2,
**caractérisé en ce que** les deux régions latérales extérieures du toit (11) sont formées de manière rehaussée par rapport à une partie centrale située entre elles, et présentent à chaque fois un flanc interne (19) sur lequel est disposé le rail de guidage (18).

4. Module de toit selon l'une quelconque des revendications 1 à 3, **caractérisé en ce que** l'on prévoit comme composant de module de toit différents composants que l'on peut monter sur le module de toit (10).

5. Module de toit selon la revendication 4,
**caractérisé en ce que** le composant du module de toit est un couvercle (17), une boîte de charge fermée (23) ou un dispositif de support ouvert (26).

6. Module de toit selon l'une quelconque des revendications 1 à 5,
**caractérisé en ce qu'**une région intérieure située entre les deux régions latérales extérieures du toit (11) est divisée au moins en une portion fonctionnelle avant (13) et une portion fonctionnelle arrière (14).

7. Module de toit selon l'une quelconque des revendications 1 à 6,
**caractérisé en ce que** le module de toit (10) est monté fixement sur des longerons de toit (3).

8. Module de toit selon l'une quelconque des revendications 1 à 7,
**caractérisé en ce que** le module de toit (10) est monté fixement sur des longerons de toit latéraux (3), du côté avant sur un tablier (8) et du côté arrière sur un longeron transversal arrière du toit (9).

9. Module de toit selon l'une quelconque des revendications 1 à 8,
**caractérisé en ce qu'**une portion fonctionnelle avant (13) du module de toit (10) est une partie de toit ouvrable, notamment un toit ouvrant guidé à l'extérieur, ou un toit ouvrant guidé à l'intérieur.

10. Module de toit selon l'une quelconque des revendications 1 à 9,
**caractérisé en ce que** des logements de fixation supplémentaires (21, 21') sont prévus pour des supports de charge (20).

11. Véhicule comprenant un module de toit selon l'une quelconque des revendications 1 à 10.
